# EUROPEAN PATENT APPLICATION

(11) **EP 2 362 575 A1**
(43) Date of publication of application: **31.08.2011**
(21) Application number: 11153855.9
(22) Date of filing: 09.02.2011
(51) Int. Cl.: H04L 9/08, G06F 21/00, H04N 5/00, H04N 7/16

(54) **Device and method for establishing secure trust key**

(30) Priority: 19.02.2010 EP 10154173
(71) Applicant: Irdeto Corporate B.V., 2132 LS Hoofddorp (NL)
(72) Inventor: Curtin, Bruce Victor, 2132 LS Hoofddorp (NL); Hoogenboom, Ronaldus Petrus Johannes, 2132 LS Hoofddorp (NL)
(74) Representative: De Vries & Metman

(57) **Abstract**

The invention relates to an electronic device configured for encrypted data transfer with a smart card under a trust key. The device comprises at least one secured portion, wherein the device is configured for performing a key exchange algorithm with the smart card for establishing the trust key for the encrypted data transfer between the device and the smart card and wherein the device is configured for storing the trust key in the secured portion of the device.

## Description

### FIELD OF THE INVENTION

The invention relates to the establishment of a secure trust key for securing data transfer between a device and a smart card. More specifically, the invention relates to the establishment of a secure trust key in a device and a smart card for secure data transfer using a key-exchange algorithm.

### BACKGROUND OF THE INVENTION

Conditional access systems for digital video broadcast (DVB) transmissions are well known and widely used in conjunction with pay television services. Such systems provide secure transmission of a broadcast stream comprising one or more services to a digital receiver contained for example in a set-top box or a mobile terminal supporting broadcast services. To protect the broadcast services from unauthorized viewing, the data packets are scrambled (encrypted) at the transmitter side with an encryption key commonly referred to as a control word. Further security is provided by periodically changing the control words so they are only valid for a certain period. Typically control words are transmitted in encrypted form to the receiver using so-called entitlement control messages (ECMs).

In the receiver an ECM is filtered out of a transport stream and sent to a secure computing environment, e.g. a smart card. The smart card subsequently decrypts the ECM using a higher-level key, which is common to all smart cards that are authorised to receive the TV channels associated with that key. The control word is returned to the receiver, which immediately loads the control word into the descrambler for descrambling data.

The transmission of control words from the smart card to the receiver is vulnerable to interception of the control word on the interface between the smart card and the receiver. Control word piracy is a significant problem in digital video broadcasting (DVB) systems. Sometimes attackers are able to intercept a control word CW that is transmitted from the smartcard to the receiver and redistribute it over local wireless networks or over the internet. The redistributed control word is then used to descramble the scrambled services without a legitimate smartcard. In order to complicate control word piracy, it is known that the smart card and receiver use a chip set session key CSSK for encrypting the stream of control words on the interface between the smart card and the receiver.

Currently, the smart card is pre-provisioned with a unique serial number and a unique key and the chip set of the receiver is also pre-provisioned with a chip set serial number CSSN. Moreover, a chip set unique key CSUK is stored in a secured portion of the receiver, and CSSN and CSUK are linked. CSSN and CSUK cannot be changed after being provisioned in the receiver. Key CSUK is not stored in the smart card.

The establishment of the session key CSSK for data transfer between the smart card and the receiver is problematic to some extent. Before a customer can use a smart card - receiver combination, he or she is obliged to contact a party and provide information regarding the serial number of the smart card and the serial number of the chip set to this party. This information enables the contacted party to initiate the transmission of a message (typically an entitlement management message EMM) encrypted under the unique key of the smart card and containing the key CSSK and the key CSSK encrypted under the chip set unique key CSUK. The smart card receiving the encrypted message decrypts the message using the unique key of the smart card and now possesses the key CSSK. The smart card also loads the key CSSK encrypted under CSUK in the secured portion of the receiver, where it is decrypted using CSUK, such that CSSK is also available at the receiver. Subsequently, control words can be transferred over the interface from the smart card to the receiver, the control words being encrypted at the smart card and decrypted in the secured portion of the receiver under the obtained key CSSK.

WO 97/38530 A1 describes a device generating a random key Ci and random number A, and transferring Ci and A to a second device in a first message encrypted using the first device's public key. The second device decrypts the first encrypted message by means of a corresponding secret key to obtain Ci and A. The second device transfers a second message to the first devce, the second message being A encrypted under Ci used as an encryption key. The first device decrypts the second encrypted message using the generated Ci and verifies whether A is correct.

WO 03/079687 A1 describes a secure data processing system that includes a central processor CPU and a hardware part HW. The hardware part HW may be implemented in such a way no data item which said dedicated hardware part HW manipulates circulates outside said hardware part HW

There is a need in the art for secure data transfer between a device and a smart card that can be achieved in a less complex manner. Known key exchange algorithms (e.g., Diffie-Hellman Protocol) allow the establishment of a key in two devices without relying on a trusted party. Typically, security in an electronic device or a smart card is provided by special hardware integrated circuits (e.g., single chips) that are read-write proof and tamper resistant (also referred to as "secured module", "secured chip", "secured portion", "secure hardware device"). One option to protect the keys in a key exchange algorithm is to extend the feature set of the secured chip and implement encryption/decryption functionality to ensure that keys are transferred safely between the electronic device and the smart card. However, providing additional encryption/decryption functionality or sophisticated algorithms in a secure hardware device requires significant modifications to the integrated circuit. Fixing those functionality or sophisticated algorithms onto hardware decreases flexibility of the system since it cannot be readily updated by software. Implementation of encryption/decryption in hardware could drastically, for example, increase the complexity of the chip, the size of the chip, processing load of the chip, hardware design/implementation costs, or delay time to market of chips, etc. In certain cases, implementing additional security measures in secure hardware may simply not be commercially viable.

### SUMMARY OF THE INVENTION

An electronic device, such as a receiver of set-top box or a mobile device, configured for encrypted data transfer with a smart card under a trust key is disclosed. The electronic device comprises at least one secured portion. A trust key refers to a key established as separate instances of the key for at least two or more parties, wherein the at least two or more parties assume that the separate copies of the key correspond. The assumption of key correspondence between the two parties is necessary for correct operation/communication between the two parties. For example, a trust key may be used as a shared secret between two parties to encrypt and decrypt other content transmitted between the two parties. As used herein, a secured portion is a dedicated part of the device containing hardware elements not allowing access by means of read/write operations of data from outside the secured portion and only allowing data transfer with non-secured portions of the receiver in encrypted form. An example of a secured portion is a secured crypto-engine. Functions realized in the secured portion are also generally implemented as hardware elements.

The smartcard is typically a separate card that is or can be manually inserted into the receiver before operation. However, the smart card can also be an integrated part of the electronic device. In some embodiments, the smartcard includes secured integrated circuit or hardware elements that prevents access by means of read/write operations of data from outside the smartcard, and only allowing data transfer with non-secured portions of the receiver in encrypted form.

The electronic device is configured for performing a key exchange algorithm with the smart card for establishing the trust key for the encrypted data transfer between the device and the smart card. The device is configured for storing the established trust key in the secured portion of the device.

A method for establishing a trust key between a device and a smart card, wherein the device comprises such a secured portion is also disclosed. The method comprises the steps of performing a key exchange algorithm between the device and the smart card to obtain the trust key in the device and the smart card and storing the trust key in the secured portion of the device. Data may now be encrypted in the smart card under the trust key and directly transferred to the secured portion of the device, where it can be decrypted using the trust key stored in the secured portion.

The key exchange algorithm functionality, e.g. a Diffie-Hellman protocol, implemented in the electronic device and the smart card, enables the smart card and the electronic device to locally agree on the trust key once the smart card and the electronic device are brought into operative contact without the need for contacting another party. The trust key can be used for secure transfer of data (e.g. control words) between a smart card and a receiver by encryption under the trust key. By storing the trust key in a secured portion of the device, data from the smart card can be transferred, encrypted under the trust key, from the smart card directly into the secured portion of the electronic device without being exposed in unencrypted form in the non-secured portion(s) of the device. Since access to the secured portion of the device is virtually impossible, the trust key cannot be obtained from the device and data, such as control words, can be safely transferred to this secure portion under the trust key.

Key exchange algorithms are described in the book Applied Cryptography, ISBNO-471-12845-7, by Bruce Schneier. It should be acknowledged that the key exchange algorithm steps may be preceded by or combined with certificate verification steps between the smart card and the electronic device. As an example, Diffie-Helman public keys can be exchanged between the smart card and the secure device in combination with certificate verification steps.

In an embodiment of the invention, the secured portion of the device is configured for performing at least a portion of the key exchange algorithm. This embodiment has the advantage that the storage of the trust key in the secure portion resulting from the execution of the key exchange algorithm can be done without further measures as the trust key is obtained within the secured portion. The key exchange algorithm operations are implemented using hardware elements.

In an embodiment of the invention, the device comprises at least one non-secured portion. The non-secured portion comprises e.g. firmware of the device allowing external read/write operations.

The non-secured portion may also comprise a processor with on-chip memory, allowing read/write operations on the on-chip memory by loading software in the processor.

The non-secured portion is configured for performing the key exchange algorithm part for the device in a software module. This embodiment has the advantage that the secured portion(s) should not be configured with dedicated hardware elements for performing key exchange algorithm operations. In order to allow safe storage of the resulting trust key, the non-secured portion is configured to enable protecting the trust key and the secured portion is configured to enable deriving (e.g., de-tranforming, decrypting) from the protected trust key the trust key to be stored in the secure portion.

An example of securing the transfer of the trust key from the non-secure portion to the secure portion of the device is the use of white box cryptography. White box cryptography is described in "White-Box Cryptography and an AES Implementation", by Stanley Chow, Philip Eisen, Harold Johnson, and Paul C. Van Oorschot, in Selected Areas in Cryptography: 9th Annual International Workshop, SAC 2002, St. John's, Newfoundland, Canada, Aug. 15-16, 2002, and "A White-Box DES Implementation for DRM Applications", by Stanley Chow, Phil Eisen, Harold Johnson, and Paul C. van Oorschot, in Digital Rights Management: ACM CCS-9 Workshop, DRM 2002, Washington, D.C., USA, Nov. 18, 2002, which are incorporated by reference in the present application in its entirety. The basic idea of white-box cryptography is to hide a key, or a portion thereof, by obscuring the key or the portion thereof in lookup tables Lₙ. A sequence of lookup operations implements the function of a white box implementation module.

In an embodiment, the trust key as disclosed in the present application can be secured by this technique. White box crypto generally includes the use of transformation functions, i.e. bijection functions. In mathematical form, the decryption function D can be written as D = L₀ 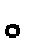 L₁ 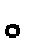 L₂ 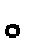 ... 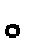 Lₙ (x), wherein Lₙ is a table lookup operation. By combining this with random input and output transformation functions F, G, the function D'=F⁻¹ 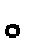 D 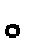 G can implemented. In the embodiment, input information for the non-secured portion of the device is locally transformed by the smart card, thereby obviating the need for receiving transformed input information from a head end. The transformed input is sent to the non-secure portion of the device for performing the white box cryptography. This may be advantageous to offload some functionality to the non-secure portions of the device to reduce modifications to the secure hardware.

In an embodiment of the invention, the output of the white box crypto operation is a transformed output and the function for detransforming the output is implemented in the secured portion of the device. In other words, the white box cryptographic operation is extended into the secured portion of the device and the smart card, thereby complicating extracting the trust key from the non-secured portion of the device. The hardware implemented final transformation constitutes a hardware anchor. Whereas the key exchange algorithm operations can be done entirely in the non-secured portion of the device (reducing the amount of hardware elements and/or modifications in the secure portion), the transformed trust key output only has a meaning for the secured portion containing the final transformation function for deriving (de-transform) the trust key to be stored there. The white box cryptography instance is useless in another receiver with an inverse transform for a different final transform.

It may be desired to change the key under which the data transfer between the smart card and the device is protected now and then. Changing the key may e.g. be invoked when the device/receiver is rebooted or the smart card is extracted from the device. Also, a head end may have provided instructions for cycling the key. Although the trust key may be used for protecting data, such as control words, when transferred over the interface between the smart card and the device, the establishment of a new trust key requires performing a key exchange algorithm, which takes some time (primarily because of the limited computing resources of the smart card). Therefore, in order to be able to change the key under which the data is protected more rapidly, in the embodiment of the invention as defined in claim 5, the device and the smart card may agree on a further key for the actual data transfer protection. In an embodiment of the invention, the further key may be generated either in the smart card or in the secure portion of the device and transferred to the device, respectively, the smart card encrypted under the already established trust key. The further key is established locally, i.e. at the side of the device or smart card and not at the head end, and can be cycled at a higher rate than the trust key.

As mentioned above, in an embodiment of the invention, the device is a receiver receiving encrypted content data. The secured portion of the receiver is configured for decrypting the encrypted content data and forwarding the decrypted content data in the direction of a rendering device. The decryption of the content data is performed under the control of the encrypted data (control words encrypted under the trust key or the further key mentioned above) transferred from the smart card to the receiver, more precisely to the secured portion of the receiver, where the encrypted data is decrypted (but not externally accessible) and available for the decryption of the content data.

The electronic device may be arranged such that a unique key is stored in the secured portion, wherein the device is configured for transmitting the trust key to a head end encrypted under the unique key. The chip set of the secure portion of the device contains a chip set unique key CSUK. In an embodiment of the invention, the head end from which the content data is received may be informed of the trust key established between the smart card and the device, by sending the trust key to the head end encrypted under the unique key. As mentioned under the background section, the head end typically has access to the unique key stored in the secured portion of the device and is therefore able to derive the trust key.

Hereinafter, embodiments of the invention will be described in further detail. It should be appreciated, however, that these embodiments may not be construed as limiting the scope of protection for the present invention.

### BRIEF DESCRIPTION OF THE DRAWINGS

In the drawings:
FIG. 1 is a diagram schematically illustration a method according to a first embodiment of the invention;
FIG. 2 is a diagram schematically illustration a method according to a second embodiment of the invention;
FIG. 3 is a schematic illustration of a device-smart card combination implementing the method illustrated in FIG. 1;
FIG. 4 is a diagram illustrating the application of transformation functions in relation to encryption;
FIG. 5 is a schematic illustration of a device-smart card combination implementing the method illustrated in FIG. 2;
FIG. 6 is a schematic illustration of a device-smart card combination enabling secure data transfer;
FIG. 7A shows a block diagram of a function performing a mathematical transformation;
FIG. 7B shows a block diagram of a function performing a mathematical transformation under control of a seed;
FIG. 8A shows a block diagram of an apply primitive;
FIG. 8B shows a block diagram of a remove primitive;
FIG. 8C shows a block diagram of a condition primitive;
FIG. 8D shows a block diagram of a combination of a remove and an apply primitive; and
FIG. 8E shows a block diagram of a secure correlation of compounds.

### DETAILED DESCRIPTION OF THE DRAWINGS

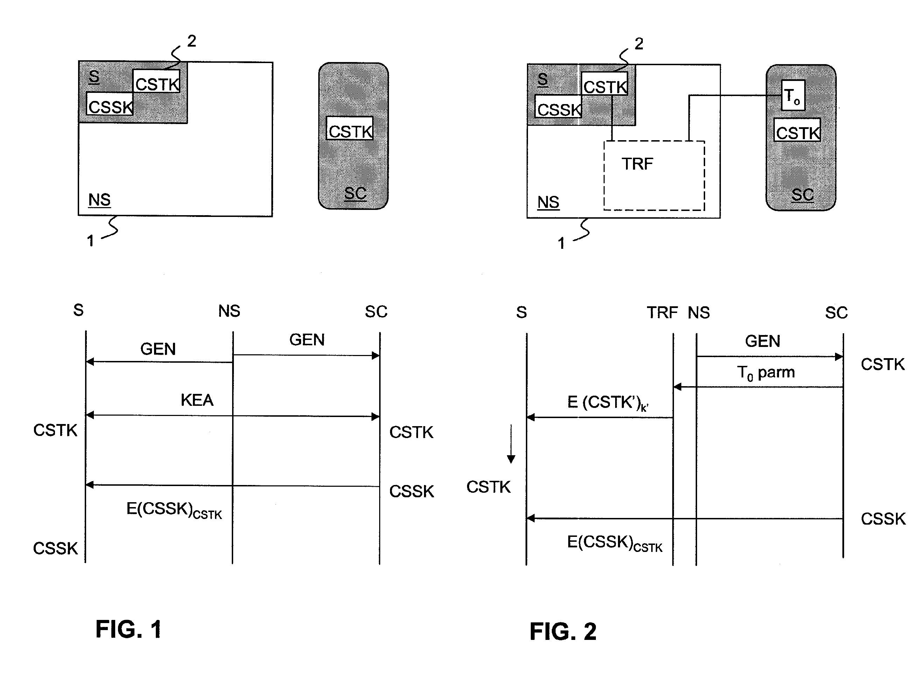

FIG. 1 shows a schematic illustration of an electronic device 1 and a smart card SC that can be brought into operative contact in a manner knows as such. The electronic device 1 may e.g. be a receiver for a set-top box or a mobile phone. The smart card SC may e.g. be a dedicated smart card for insertion into the set-top box or a SIM card of a mobile phone.

Secured portions of the electronic device and the smart card SC are indicated in grey.

The electronic device 1 comprises a secured portion S and a non-secured portion NS. The secured portion S comprises a memory 2 for secure storage of data, such as a trust key CSTK and a session key CSSK, that will be described in further detail below. The secured portion S is a dedicated part of the device 1 containing hardware elements not allowing access by means of read/write operations of data from outside the secured portion S and only allowing data transfer with non-secure portions NS of the receiver in encrypted form. An example of a secure portion S is a secure crypto-engine. Functions realized in the secured portion are also generally implemented as hardware elements. The smart card SC is completely secured.

When the electronic device 1 and the smart card SC are brought in operative contact, the electronic device 1 detects the operative contact and signals GEN are issued, e.g. automatically, from the non-secured portion NS to the smart card SC and to the secure portion S to perform a key exchange algorithm KEA. Key exchange algorithms are described in the book Applied Cryptography, ISBNO-471-12845-7, by Bruce Schneier, incorporated in the present application by reference. Key exchange algorithms includes Diffie-Hellman (DH) algorithms, elliptic curve DH algorithms etc.

Signals GEN may be combined in a certification verification procedure and may load parameters and other data for use during the key exchange algorithm.

Part of the key exchange algorithm may include the exchange of public keys for establishing the trust key CSTK between the secure portion S and the smart card SC. The public key exchange for establishing the trust key CSTK may be strengthened using further public-private key encryption techniques.

The KEA functionality implemented in the electronic device 1 and the smart card SC, enables the smart card SC and the electronic device 1 to locally agree on the trust key CSTK once the smart card SC and the electronic device 1 are brought into operative contact without the need for contacting another party. The trust key CSTK can be used for secure data transfer between a smart card and a receiver, such as securely providing control words encrypted under the trust key CSTK as will be described in further detail below. By storing the trust key CSTK in the secured portion S of the device 1, data from the smart card SC can be transferred, encrypted under the trust key CSTK, from the smart card SC directly into the secured portion S of the electronic device 1 without being exposed in unencrypted form in the non-secured portion NS of the device 1. Since external access to the secured portion S of the device 1 and to the smart card SC is virtually impossible, the trust key CSTK cannot be obtained from the device 1 and data, such as control words, can be safely transferred to this secured portion S under the trust key CSTK.

Now that the device 1 and the smart card SC have established a trust key, the smart card SC may generate a further key CSSK for the actual protection of the data. If the smart card SC generates the further key CSSK, the trust key CSTK can be used for encrypting the further key CSSK by any known encryption algorithm E and send this further key CSSK to the secured portion S of the device 1 as shown in FIG. 1. In the secured portion S, the encrypted message can be decrypted using a decryption algorithm and the stored key CSTK in order to derive CSSK. From now on, data can be transferred under the further key CSSK with the same level of protection as under CSTK. Establishing CSSK is faster than establishing CSTK using the key exchange algorithm KEA, thereby facilitating more rapid CSSK key cycling for data encryption between the smart card SC and the secured portion S of device 1. Further key CSSK is also stored in memory 2 of the secured portion S.

Of course, in an alternative embodiment, the further key CSSK is generated in the secured portion S and transferred to the smart card SC encrypted under the trust key CSTK.

FIG. 2 provides a schematic illustration of an alternative embodiment of the invention, wherein the key exchange algorithm is performed using the non-secured portion NS of the device 1. This may be advantageous as it may avoid the need for adding and/or adapting many hardware elements in the secured portion S of the device 1. This advantage is realized when the algorithm uses in part a white-box implementation of encryption/decryption (implementation is obscured by transformations to achieve white-box security), details of which are described herein. In the embodiment of FIG. 2, the device makes use of a transformation domain TRF in the non-secured portion NS of the device 1.

When operative contact between the smart card SC and the device 1 is established, the transformation domain TRF receives a transformed input (e.g. a transformed public key), generated locally at the smart card SC using transformation function To for providing input for the key exchange algorithm part at the side of the device 1. Furthermore, information (e.g. a public key) is provided from the device 1 to the smart card SC (signal GEN) for performing the key exchange algorithm at the side of the smart card SC. In the transformation domain, white box cryptography is applied on the transformed input in order to generate a transformed trust key CSTK'. The transformed trust key CSTK' is sent to the secure portion S of the device 1 in protected, possibly encrypted, form E using a transformed version of a key k' also known in the secured portion S. In the secured portion S, the trust key CSTK is derived from CSTK' using a decryption algorithm and a detransformed version of the key k'.

Again, as for the embodiment of FIG. 1, a further key CSSK may be used for the actual data exchange protection between the smart card SC and the device 1.

The use of the transforms in the secured portion S and smart card enables the use of white-box cryptography techniques. As discussed, the basic idea of white-box cryptography is to hide a key, or a portion thereof, by obscuring the key or the portion thereof in lookup tables Lₙ. A sequence of lookup operations in key-dependent tables implements the function of a white box implementation module. The intent is to hide the key by a combination of encoding its tables with random bijections representing compositions rather than individual steps, and extending the cryptographic boundary by pushing it out further into the containing application (i.e., non-secure portion).

White-box crypto generally includes the use of transformation functions, i.e. bijection functions. Transformation function can be implemented as a single lookup table or more efficiently, as a concatenation of smaller bijections (lookup tables). In some embodiments, the transform module in the hardware is minimum functionality required to extend the tamper resistance provided by the hardware to the white-box protected software.

As discussed above, in mathematical form, some decryption functions D can be written as D = L₀ 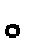 L₁ 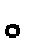 L₂ 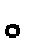 .. Lₙ(x), wherein Lₙ is a table lookup operation. By combining this with random input and output transformation functions F, G, the function D'=F⁻¹ 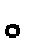 D 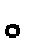 G can implemented as encoded look up tables, whereby each step of decryption function D (or any suitable encryption-decryption function) is composed with random bijections. Same logic can be applied to encryption functions. For encryption-decryption functions that can be decomposed and mixed with random bijections (i.e., transformations), the resulting data transformation embeds a standard black-box resistant algorithm (i.e., the algorithm is mixed/obfuscated by random bijections). By embedding the standard algorithm within a larger data transformation, the black-box strength of the original algorithm is retained while providing greater resistance to white box attacks. As a result, at least part of the resulting data transformation can be implemented in non-secure environments, thereby pushing more operations (e.g., look-up tables) out into the containing application, and limiting the complexity of the secured hardware.

The white-box implementation mixes the random input and output transformations with the look ups that perform the intended operation, such as encryption or decryption. Hence, an adversary first need to reverse engineer the sequence of random input and output transformations before the actual secrets can be discovered. At least portions of the white-box implementation can be implemented in secure (dedicated) hardware, while other portions of the white-box implementation can be implemented in the general non-secure environment. The portions implemented in secure hardware, or so called "hardware anchor", blocks the software from being moved to a different device with a different implementation. Furthermore, the hardware anchor allows a reduction of the dedicated hardware as the major functionality is implemented in the white-box implemented algorithm or protocol.

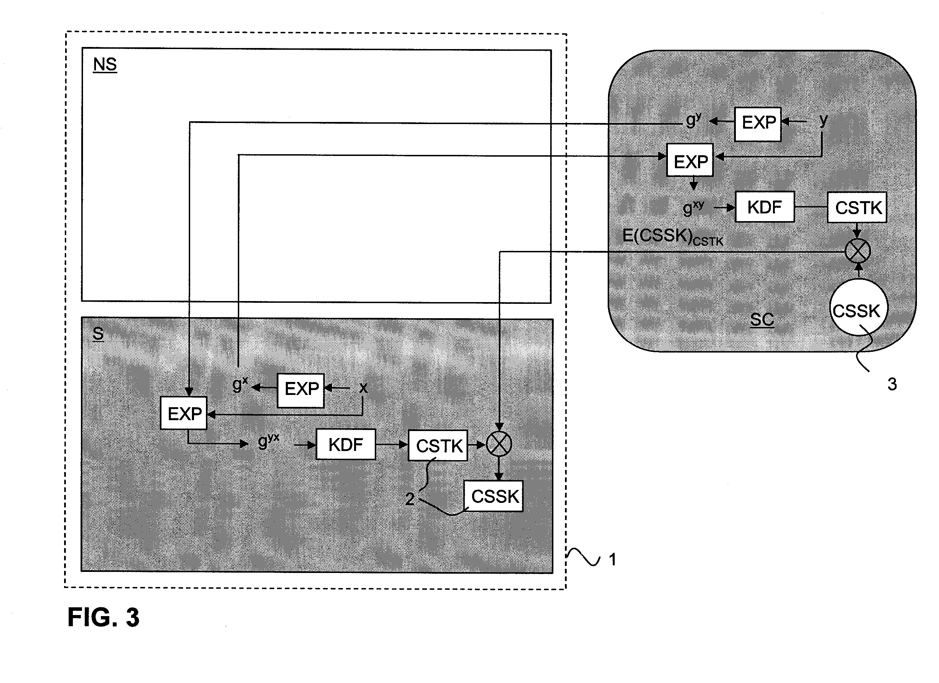

FIG. 3 is a schematic illustration of an implementation of the embodiment of FIG. 1, wherein a Diffie-Hellman (DH) protocol is applied as key exchange algorithm KEA. In the description, the modulo part of DH is ignored for clarity reasons. The DH protocol is completely performed within the secure portion S of the device 1 and in the smart card SC, i.e. entirely in the secure domain.

At the side of the device 1, a nonce x is generated in the secured portion S by a true random number generator after establishing operative contact between the smart card SC and the device 1. Furthermore, Diffie-Hellman parameter g is set as a large prime and a public key g^{x} is obtained. Public key g^{x} is transmitted to the smart card SC, possibly signed with a private key of the device 1.

At the side of the smart card SC, a nonce y is generated by a true random number generator after establishing operative contact with the device 1. Pre-personalised Diffie-Helman parameter g is applied and public key g^{y} is sent to the secured portion S of the device 1, possibly signed with a private key of the smart card SC.

Then, at both sides, the value g^{xy} or g^{yx} is calculated and a key derivation function KDF is applied to obtain the trust key CSTK. At the side of the device 1, the trust key is stored in the secure portion S. Data transfer between the smart card SC and the device 1 can now be encrypted under the trust key CSTK.

Again, as described with reference to FIG. 1, a further key CSSK can be obtained for protecting the data exchange. Smart card SC contains a key generator 3 for generating CSSK. The further key CSSK can be communicated to the secured portion S by sending a message containing encrypted CSSK at the smart card using an encryption algorithm C and the trust key CSTK and by decrypting the message using CSTK from memory 2 to obtain CSSK.

As described above with reference to FIG. 2, the trust key CSTK can also be safely obtained and stored in the secured portion S of the device 1, while performing the key exchange algorithm KEA in the non-secured portion NS by defining a transformed domain in the non-secure portion NS.

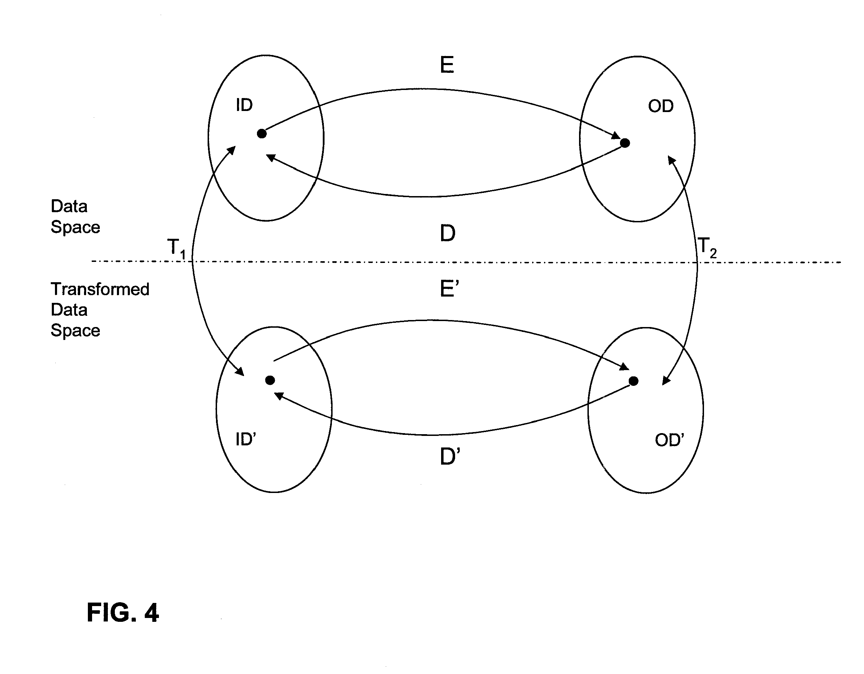

The concept of transformed domains and transformation functions is illustrated with reference to FIG. 4. Data and software obfuscation techniques make use of transformation functions to obfuscate intermediate results. The concept of transformation functions differs from encryption, which is clarified in general with reference to FIG. 4.

Assume, there exists an input domain ID with a plurality of data elements in a non-transformed data space. An encryption function E using some key is defined that is configured to accept the data elements of input domain ID as an input to deliver a corresponding encrypted data element in an output domain OD. By applying a decryption function D, the original data elements of input domain ID can be obtained by applying the decryption function D to the data elements of output domain OD.

In a non-secure environment, an adversary is assumed to be able to control the input and output data elements and the operation of the implementation of the encryption function E, in order to discover the confidential information (such as keys) that is embedded in the implementation.

Additional security can be obtained in such a non-secured environment by applying transformation functions to the input domain ID and output domain OD, i.e. the transformation functions are input- and output operations. Transformation function T1 maps data elements from the input domain ID to transformed data elements of transformed input domain ID' of a transformed data space. Similarly, transformation function T2 maps data elements from the output domain OD to the transformed output domain OD'. Transformed encryption and decryption functions E' and D' can now be defined between ID' and OD' using transformed keys. T1 and T2 are bijections.

Using transformation functions T1, T2, together with encryption techniques implies that, instead of inputting data elements of input domain ID to encryption function E to obtain encrypted data elements of output domain OD, transformed data elements of domain ID' are input to transformed encryption function E' by applying transformation function T1. Transformed encryption function E' combines the inverse transformation functions T1⁻¹ and/or T2⁻¹ in the encryption operation to protect the confidential information, such as the key. Then transformed encrypted data elements of domain OD' are obtained. By performing T1 and/or T2 in a secured portion, keys for encryption functions E or decryption function D can neither be retrieved when analysing input data and output data in the transformed data space nor when analysing the white box implementation of E' and/or D'.

One of the transformation functions T1, T2 should be a non-trivial function. In case, T1 is a trivial function, the input domains ID and ID' are the same domain. In case, T2 is a trivial function, the output domains are the same domain.

In white box cryptology, it is assumed that the processing in the transformed data space is under full control of an adversary. Under this assumption, an adversary has access to the data elements in ID', OD' and the white box implementations of the functions E' and/or D'. White box cryptology provides security by securing (parts of) the keys for the functions E and D. By applying transformation functions T1 and T2 in at least one of the smart card and the secured portion S of the device 1, the lookup tables Lₙ as described previously cannot be resolved in the transformed space as this requires knowledge of T1 and/or T2.

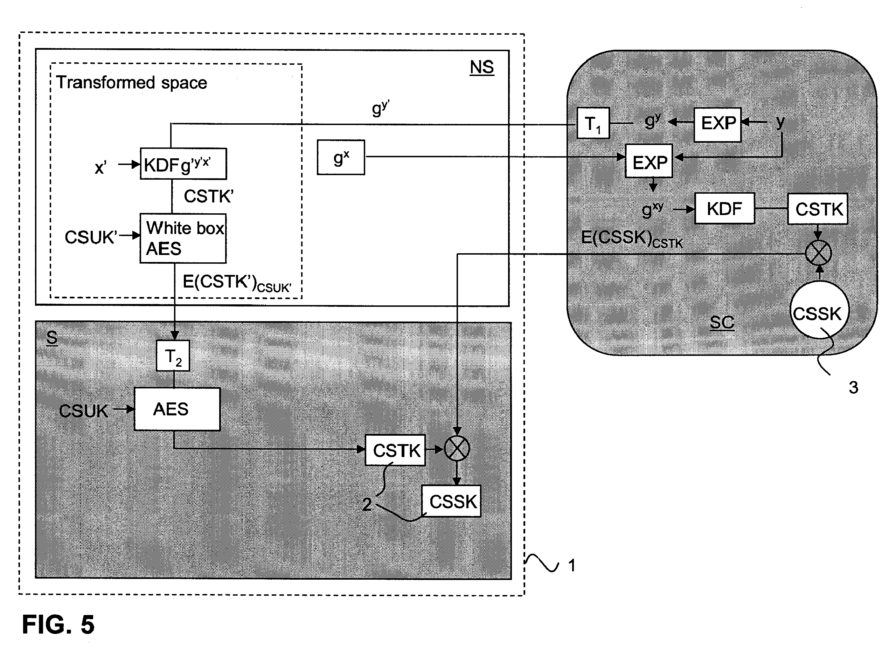

An implementation of such an embodiment using a DH key exchange algorithm is schematically illustrated in FIG. 5.

In the device 1, public key g^{x} is fed to the smart card SC, possibly signed with a private key of the device 1. The public key g^{x} is received at the smart card SC.

At the smart card SC, a random number y and a public key g^{y} is generated. Public key g^{y} from the smart card can be used within the smart card together with the received public key g^{x} to obtain g^{xy} and to derive trust key CSTK after applying a key derivation function KDF.

As opposed to the embodiment of FIG. 3, public key g^{y} is not transmitted directly to device 1, but is first transformed at the smart card SC using transformation function T1 as explained previously with reference to FIG. 4. Transformed g^{y}' is then transmitted to the device 1 where it is received in the transformed space of the non-secured portion NS of device 1. A DH transformed secret x' and a transformed version CSUK' of a unique key CSUK of the secured portion are embedded in the transformed space of the non-secured portion NS of the device 1. Applying the Diffie-Hellman algorithm in the transformed space, using transformed secret x', a transformed trust key CSTK' is obtained. CSTK' is transferred to the secured portion S of device 1 in protected form, using both transformation T2 and a white box implementation of AES using transformed key CSUK'. There, CSTK is obtained by transformation T2 and decryption process AES under the control of the unique key CSUK of the secured portion S. CSTK can be stored in memory 2 of the secured portion S.

It should be noted that transformation function T2 is not necessarily applied or can be a trivial function in the embodiment of FIG. 5, since the white box encryption under key CSUK' ensures protection of the trust key for transfer from the non-secure portion NS to the secured portion S of the device 1.

Of course, the white box encryption can also be omitted in favour of the application of transformation function T2.

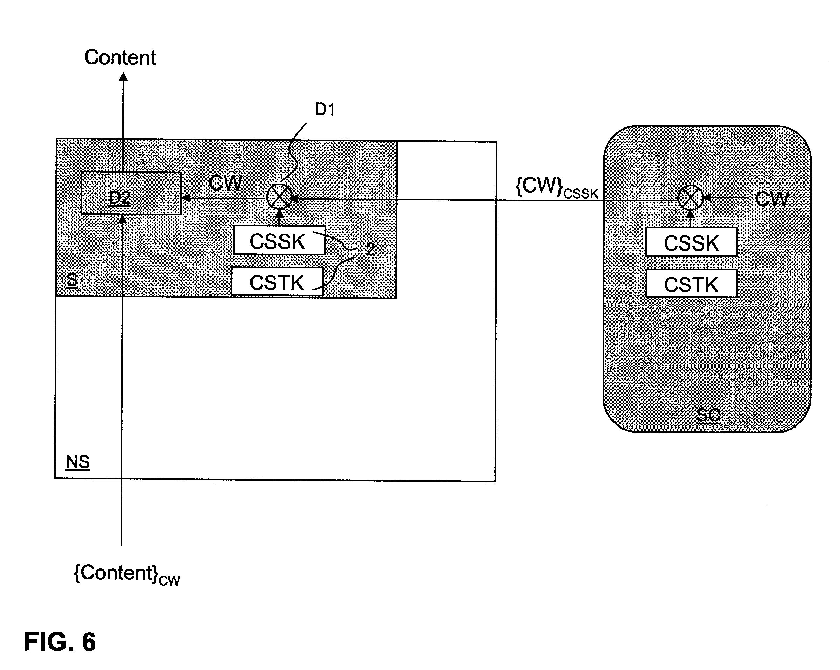

Finally, FIG. 6 provides a schematic illustration wherein data (here control words CW) to be transferred from the smart card SC to the device 1 can be transferred directly to the secure portion S of the device 1 without being exposed in the non-secure portion NS in unencrypted form. Control words are obtained within the smart card SC in a manner known as such. Assuming that the trust key CSTK has been established and that a further key CSSK has been agreed between the device 1 and the smart card SC in a manner as described above, the control words CW can now be encrypted under the further key CSSK in the smart card SC and transmitted in encrypted form to the device 1, passing the non-secure portion NS in encrypted form and decrypted in the secured portion S using a first decrypter D1, thereby obtaining the control words CW.

The control words CW are fed to a second decrypter D2, e.g. a secure crypto processor, receiving content encrypted under the control words CW in order to decrypt the encrypted content in a manner known as such and forward the decrypted content in the direction of a rendering device.

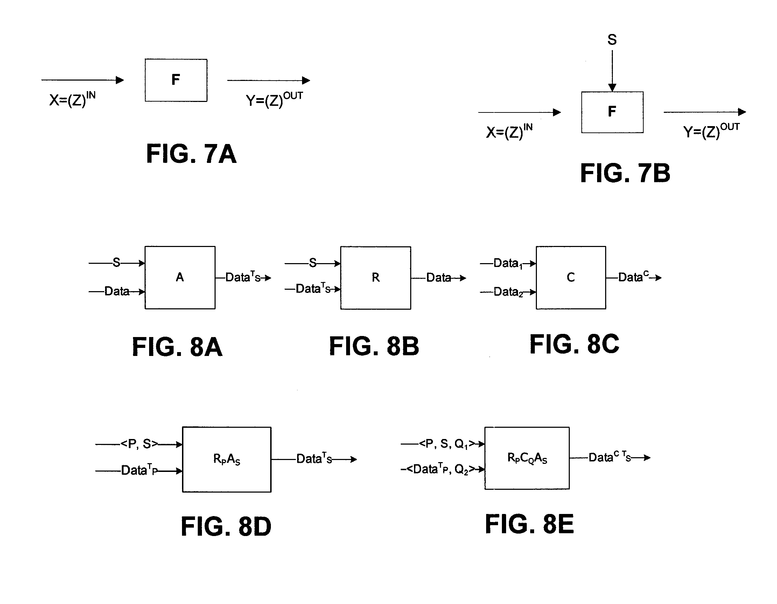

To further illustrate the difference between transformations and encryption, exemplary transformation functions are shown in FIGS. 7A-7B and 8A-8E. Said exemplary transform functions may be used as a hardware anchor in the secure portion S and/or smart card, so that other operations such as encryption/decryption in the key exchange protocol can be implemented in the non-secure portion/environment of the device. The use of transformations at least in part anchored in secure hardware may be advantageous because it reduces the amount of modifications to the existing secure hardware while white-box cryptography methods still provides reasonable security of the data.

The function F shown in FIG. 7A is a mathematical operation that migrates data Z across two different transform spaces identified by IN and OUT. The dimension of the output transform space OUT is at least as large as the input transform space IN, and any data Z is represented (possibly not uniquely) in both input and output transform spaces as X and Y respectively. The function F is designed such that it is difficult to run in reverse direction. Because no apparent mapping between the input and output transform spaces exists and the dimension of transform spaces IN and OUT is preferably significantly large, recreation of the function F is prevented. Moreover, the function F is implemented in such a way that it is difficult to extract the data Z as it passes through the function, e.g. using white-box techniques and/or other code obfuscation techniques.

With reference to FIG. 7A, function F is e.g. defined as Y=F(X)=3*X+2. If the input transform space IN is a clear text transform space, then X=(Z)^{IN}=Z. After migration the following result is obtained: Y=(Z)^{OUT}=3*X+2. To migrate Z from the output transform space to the clear text transform space again, a reverse function F⁻¹(Y)=(Y-2)/3 must be available to obtain X as follows: F⁻¹(Y)=(3*X+2-2)/3=X. In this example Z, X and Y are numbers that can be used to transform using simple addition and subtraction mathematics. It is to be understood that Z, X and Y can be data in any data format, including binary values, numbers, characters, words, and etcetera. The function F can be a more complex function and suitable for operation on e.g. binary values, numbers, characters or words.

The function F can be defined as a mathematical operation that can be seeded with an additional parameter S, as shown in FIG. 7B. The migration that the function F performs is typically defined by the seed S. Typically, no information about the input space IN and output space OUT is embedded into F. The function F is chosen such that manipulation of input data X or seed S yields an unpredictable resulting data Y in the output transform space. The seed S does not need to be secured or stored in a secure environment as the seed S is engineered in such a way that no information about transform space IN or OUT can be extracted.

With reference to FIG. 7B, function F is e.g. defined as F(X,S)=X-7+S. If the input transform space IN is a clear text transform space, then X=(Z)^{IN}=Z. After migration the following result is thus obtained: Y=(Z)^{OUT}=X-7+S=Z-7+S. If e.g. a seed S is provided as data comprising the value of 5, then F(X,5)=X-7+5 and Y=(Z)^{OUT}=X-7+5=Z-2. To migrate Z from the output transform space to the clear text transform space again, a reverse function F⁻¹(Y,S)=Y+7-S must be available to obtain X as follows: F⁻¹

(Y,S)=(X-7+5)+7-S. If the seed S=5 is known, then Z can correctly be obtained as: F⁻¹(Y,5)=(X-7+5)+7-5=X=Z.

If the input transform space IN is not a clear text transform space, then function F typically first performs a reverse transformation in the input transform space IN and next a transformation in the output transform space OUT. Such function F is e. g. defined as F(X,S₁,S₂)=F₂(F₁⁻¹(X,S₁),S₂), wherein F₁^{-1 1}(X,S₁)=X-2-S₁ and F₂(X,S₂)=X-7+S₂. After migration the following result is thus obtained: Y=(Z)^{OUT}=(X-2-S₁)-7+S₂=X-9-S₁+S₂, wherein X=(Z)^{IN}.

Seeds S₁ and S₂ can be provided as two separate seeds to first perform F₁⁻¹(X,S₁) and next perform F₂(X,S₂)_{,} or more preferably as a compound of seeds <S₁,S₂>. Generally, a compound of seeds is a mixture of multiple seeds. From the mixture of multiple seeds the individual seeds are not derivable. A parameter mixing function for mixing the seeds S₁ and S₂ is denoted as: f(S₁,S₂)=<S₁,S₂>. The function result <S₁,_{S}2> is called the compound of seeds S₁ and S₂. In the example above, if S₁=5 and S₂=7, then one compound is <S₁,S₂>=5-7=-2.

In the above examples Z, X, Y and S are numbers that can be used to transform using simple addition and subtraction mathematics. It will be understood that Z, X, Y and S can be data in any data format, including binary values, numbers, characters, words, and etcetera. The function F can be a more complex function and suitable for operation on e.g. binary values, numbers, characters or words.

The obfuscation technology typically uses basic primitives or a combination thereof to obscure data or software code transformations. Examples of basic primitives are an apply primitive, a remove primitive and a condition primitive. FIG. 8A, FIG. 8B and FIG. 8C show block diagrams of an apply primitive A, a remove primitive R and a condition primitive C, respectively.

In FIG. 8A the function A(Data,S)=Aₛ(Data)=Data^{TS} defines an apply primitive that transforms an input Data into a transformed Data^{TS} using an input seed S. In FIG. 8B the function R(Data^{TS},S)=R_{S}(Data^{TS})=Data defines a remove primitive that reverses the transformation of an input Data^{TS} using a seed S to obtain an output Data. The seed S need to be identical for the two functions A() and R() to become the inverse of each other.

The original Data and its transformed variant Data^{TS} are typically of a same size, i.e. represented by a same number of bits, making it impossible to determine, based on its size, whether or not the Data is in a particular transformed space.

In FIG. 8C the function C(Data₁,Data₂)=C_{Data1}(Data₂)=Data^{c} defines a conditional transformation wherein the output Data^{c} is a correlation of the two inputs Data₁ and Data₂. The condition primitive typically preserves the size of the input data and output data, making it impossible to determine whether or not the Data is the result of a correlation.

Primitives such as the apply primitive, remove primitive and the condition primitive can be combined. The combination produces a new operation wherein the individual primitives are invisible.

FIG. 8D shows an example of a combination of a remove and an apply primitive. The transformation operation uses a compound <P,S> as input to the combined remove and apply operation applied to input Data^{TP}. The RpAₛ function maps the input Data^{TP} from input transform domain P to output transform domain S to obtain output Data^{TS}. All inputs and outputs of the combined remove and apply operation are either transformed or in the form of a compound. The operation is applied to transformed data and produces transformed data. Thus the transformation operation takes place in transformed domain spaces and reveals no individual parameters or untransformed data on any of the interfaces. The function used to produce the compound <P,S> is preferably unique and linked to the implementation of the combined apply and remove operation.

FIG. 8E shows an example of a secured correlation operation on two input compounds <P,S,Q₁> and <Data^{TP}, Q₂>. The R_{P}C_{Q}A_{S} function combines a remove, condition and apply primitive to thereby create output Data^{CTS}.

One embodiment of the invention may be implemented as a program product for use with a computer system. The program(s) of the program product define functions of the embodiments (including the methods described herein) and can be contained on a variety of computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., floppy disks within a diskette drive or hard-disk drive or any type of solid-state random-access semiconductor memory, flash memory) on which alterable information is stored.

## Claims

1. An electronic device configured for encrypted data transfer with a smart card under a trust key, the device comprising at least one secured portion, wherein the device is configured for performing a key exchange algorithm with the smart card for establishing the trust key for the encrypted data transfer between the device and the smart card and wherein the device is configured for storing the trust key in the secured portion of the device.

2. The electronic device according to claim 1, wherein the secured portion is configured for performing at least a portion of the key exchange algorithm in the device.

3. The electronic device according to claim 1, wherein the device comprises at least one non-secured portion, wherein the non-secured portion is configured for performing the key exchange algorithm in the device and wherein the device is configured for transferring a protected trust key from the non-secured portion to the secured portion, wherein the secured portion is configured for deriving from the protected trust key the trust key to be stored in the secured portion.

4. The electronic device according to claim 3, wherein the non-secured portion is configured for receiving a transformed input for the key exchange algorithm from the smart card for performing the key exchange algorithm and for protecting the trust key using white box cryptography.

5. The electronic device according to claim 3 or 4,
wherein the white box cryptography is arranged for providing a transformed output from the non-secured portion to the secured portion, the transformed output comprising a transformed trust key, wherein the secured portion of the device contains a transformation function capable of deriving from the transformed trust key the trust key to be stored in the secured portion.

6. The electronic device according to one or more of the preceding claims, wherein the device is further configured agreeing a further key with the smart card, the device being configured for at least one of:
- receiving in the secured portion the further key encrypted under the trust key and decrypting the encrypted further key to derive the further key in the secured portion using the stored trust key; and
- generating the further key, encrypting the further key using the stored trust key and transmitting the encrypted further key to the smart card.

7. The electronic device according to one or more of the preceding claims, wherein the device comprises a content receiver receiving encrypted content, wherein the secured portion comprises:
- a first decrypter configured for decrypting the encrypted data from the smartcard using the trust key stored in the secured portion or the further key of claim 6;
- a second decrypter configured for decrypting the encrypted content using the decrypted data.

8. A method for establishing a trust key between a device and a smart card, the device comprising a secured portion, the method comprising the steps of:
- performing a key exchange algorithm between the device and the smart card to obtain the trust key in the device and the smart card; and
- storing the trust key in the secured portion of the device.

9. The method according to claim 8, further comprising the step of performing the key exchange algorithm for the device in the secured portion of the device.

10. The method according to claim 8, wherein the device comprises a non-secured portion, the method comprising the steps of:
- performing the key exchange algorithm for the device in the non-secured portion of the device to obtain the trust key; and
- transferring the trust key from the non-secured portion to the secured portion in protected form.

11. The method according to claim 10, further comprising the steps of:
- receiving a transformed input for the key exchange algorithm from the smart card in the non-secured portion, and
- protecting the trust key using white box cryptography.

12. The method according to claim 10 or 11, further comprising the steps of;
- providing a transformed output from the non-secured portion to the secured portion, the transformed output comprising a transformed trust key,
- applying a transformation function in the secured-portion of the device for deriving the trust key to be stored in the secured portion.

13. The method according to one or more of the claims claim 8-12, further comprising the steps of:
- transferring data encrypted under the trust key to the secured portion of the device;
- decrypting the data in the secured portion of the device using the stored trust key.

14. The method according to claim 13, further comprising the steps of:
- generating a further key in the smart card or the device;
- transferring the further key to the device or the smart card encrypted under the trust key; and
- transferring data between the smart card and the device encrypted under the further key.

15. A smart card for use in combination with the electronic device of one or more of the claims 1-7 or in the method of one or more of the claims 8-14.
